# EUROPÄISCHE PATENTSCHRIFT

(11) **EP 2 753 516 B1**
(45) Veröffentlichungstag und Bekanntmachung des Hinweises auf die Patenterteilung: **15.01.2020**
(21) Anmeldenummer: 12769972.6
(22) Anmeldetag: 07.09.2012
(51) Int. Cl.: B60T 8/17

(54) **BREMSKRAFTERFASSUNG FÜR DYNAMISCHE BREMSEN EINES SCHIENENFAHRZEUGS**
BRAKE FORCE DETECTION FOR DYNAMIC BRAKES OF A RAIL VEHICLE
DÉTECTION DE LA FORCE DE FREINAGE POUR LES FREINS DYNAMIQUES D'UN VÉHICULE FERROVIAIRE

(30) Priorität: 09.09.2011 DE 102011113086
(43) Veröffentlichungstag der Anmeldung: 16.07.2014
(73) Patentinhaber: KNORR-BREMSE Systeme für Schienenfahrzeuge GmbH, 80809 München (DE)
(72) Erfinder: HERDEN, Marc-Oliver, 81377 München (DE); RAU, Rainer, 82538 Geretsried (DE); TRINKBERGER, Andreas, 85435 Erding (DE)
(86) Internationale Anmeldenummer: PCT/EP2012/067567
(87) Internationale Veröffentlichungsnummer: WO 2013/034731

(56) Entgegenhaltungen:
- EP-A2- 2 226 226
- WO-A1-02/49897
- DE-A1- 19 510 755
- DE-A1-102006 057 065

## Beschreibung

Die vorliegende Erfindung betrifft eine Steuereinrichtung für ein Schienenfahrzeug mit einer Bremsanlage, eine Bremsanlage, ein Schienenfahrzeug sowie ein Verfahren zum Bestimmen einer durch eine dynamische Bremseinrichtung ausgeübte Bremskraft.

Die DE 195 10 755 A1 offenbart eine Steuereinrichtung für ein Schienenfahrzeug wobei das Schienenfahrzeug eine Bremsanlage mit mindestens einer dynamischen Bremseinrichtung und mindestens einer weiteren Bremseinrichtung aufweist.

Moderne Schienenfahrzeuge weisen Bremsanlagen mit Bremseinrichtungen auf, die auf unterschiedliche Arten wirken. Häufig sind als Betriebsbremseinrichtungen beispielsweise druckbetätigte Bremseinrichtungen vorgesehen, insbesondere pneumatische Bremseinrichtungen. Zur Unterstützung der Betriebsbremsen kommen zusätzlich dynamische Bremsen zum Einsatz, wie beispielsweise elektrodynamische Bremsen, rotierende Wirbelstrombremsen oder hydrodynamische Bremsen. Dynamische Bremseinrichtungen umfassen kraftschlussabhängige Bremsen, deren Bremskraft über einen Kontakt zwischen Rad und Schiene auf die Schiene übertragen wird. Daher wirken sie in kritischer Weise mit herkömmlichen, ebenfalls kraftschlussabhängigen Betriebsbremsen zusammen. Als kraftschlussunabhängige Bremsen werden hingegen allgemein Bremsen bezeichnet, deren Bremskraft unabhängig vom Kraftschluss zwischen Rad und Schiene übertragen wird. Ein Beispiel für eine kraftschlussunabhängige Bremse ist eine Magnetschienenbremse, die einen eigenen direkten Reibkontakt zur Schiene herzustellen vermag, über welchen sie Bremskraft überträgt. Um bei einem Bremsvorgang die Wirkung derartiger dynamischer Bremsen einschätzen und steuern zu können, insbesondere um zu vermeiden, dass bei einem Zusammenwirken mit anderen kraftschlussabhängigen Bremsen ein Rad überbremst wird, ist eine Erfassung der von dynamischen Bremsen ausgeübten Bremskraft erforderlich. Die damit verbundene Sensorik ist aufwendig und teuer.

Eine Aufgabe der vorliegenden Erfindung besteht darin, eine effiziente und kostengünstige Möglichkeit zur Bestimmung der Bremskraft dynamischer Bremsen bereitzustellen.

Diese Aufgabe wird durch die Merkmale der unabhängigen Ansprüche gelöst.

Weitere vorteilhafte Ausgestaltungen und Weiterbildungen der Erfindung ergeben sich aus den abhängigen Ansprüchen.

Die vorliegende Erfindung betrifft eine Steuereinrichtung für ein Schienenfahrzeug, wobei das Schienenfahrzeug eine Bremsanlage mit mindestens einer dynamischen Bremseinrichtung und mindestens einer weiteren Bremseinrichtung aufweist. Die Steuereinrichtung ist dazu ausgebildet, basierend auf Verzögerungsdaten, welche eine Gesamtverzögerung des Schienenfahrzeugs repräsentieren, auf Fahrwiderstandsdaten, welche einen Fahrwiderstand des Schienenfahrzeugs repräsentieren und Bremsdaten, welche eine durch die mindestens eine weitere Bremseinrichtung ausgeübte Bremskraft repräsentieren, eine während einer Bremsung durch die dynamische Bremseinrichtung ausgeübte Bremskraft zu bestimmen. Somit kann aus Daten, welche bezüglich einer Bremsung von anderen Fahrzeugsystemen vorliegen, die durch die dynamische Bremseinrichtung ausgeübte Bremskraft bestimmt werden. Damit können spezielle Sensoren zum Erfassen der durch die mindestens eine dynamische Bremseinrichtung ausgeübten Bremskraft eingespart werden. Alternativ oder zusätzlich kann vorgesehen sein, dass eine durch Bremskraftsensoren der dynamischen Bremseinrichtung erfasste Bremskraft mit einer basierend auf den Verzögerungsdaten, den Fahrwiderstandsdaten und den Bremsdaten bestimmten Bremskraft verglichen werden, etwa um eine Plausibilitätskontrolle, Kalibrierung und/oder Eichung durchzuführen. Die Steuereinrichtung kann dazu ausgebildet sein, die durch die mindestens eine dynamische Bremseinrichtung ausgeübte Bremskraft basierend auf mindestens einem Fahrzeugparameter und/oder einer Fahrzeuggeschwindigkeit zu bestimmen. Ein Fahrzeugparameter kann beispielsweise eine Fahrzeugmasse und/oder eine Fahrzeuglast repräsentieren. Eine dynamische Bremseinrichtung kann insbesondere eine kraftschlussabhängige Bremseinrichtung sein, welche eine Bremskraft über einen Rad-Schiene-Kontakt überträgt. Eine dynamische Bremseinrichtung kann insbesondere mindestens eine elektrodynamische Bremse, eine rotierende Wirbelstrombremse und/oder eine hydrodynamische Bremse umfassen. Die mindestens eine weitere Bremseinrichtung kann eine kraftschlussabhängige oder eine kraftschlussunabhängige Bremseinrichtung umfassen, die nicht zu den dynamischen Bremseinrichtungen zu rechnen ist. Als eine kraftschlussabhängige weitere Bremseinrichtung kann eine Reibbremseinrichtung vorgesehen sein, wie beispielsweise eine Klotzbremse, Scheibenbremse oder kombinierte Klotz/Scheibenbremse. Eine Reibbremseinrichtung kann eine druckbetätigte Bremseinrichtung sein, etwa eine pneumatische oder hydraulische Reibbremseinrichtung. Als kraftschlussunabhängige Bremseinrichtung kann eine Schienenbremse, insbesondere eine Magnetschienenbremse oder lineare Wirbelstrombremse, oder eine aerodynamische Bremse vorgesehen sein. Allgemein kann eine Bremseinrichtung eine oder mehrere Bremsen aufweisen, die zum Bremsen unterschiedlicher Radachsen und/oder Drehgestelle vorgesehen sein können. Die Bremsen einer Bremseinrichtung können dabei den gleichen Typ aufweisen. Die mehreren Bremsen können separat ansteuerbar sein. Es können eine oder mehrere derartiger nicht-dynamischer Bremseinrichtungen vorgesehen sein. Allgemein können Daten, welche eine Größe oder einen Zustand repräsentieren, diese Größe oder diesen Zustand direkt angeben. Es ist auch vorstellbar, dass basierend auf derartigen Daten die entsprechende Größe oder der entsprechende Zustand bestimmbar ist, etwa durch Durchführen von Transformationen und/oder Berechnungen. Eine Größe kann beispielsweise eine durch eine Bremseinrichtung ausgeübte Bremskraft sein. Ein Fahrwiderstand kann einen Zustand beschreiben, der sich auf eine Bremskraft abbilden lassen kann. Die Steuereinrichtung kann dazu ausgebildet sein, entsprechende Berechnungen und/oder Transformationen durchzuführen. Die Steuereinrichtung kann eine oder mehrere Komponenten aufweisen. Es ist vorstellbar, dass die Steuereinrichtung ein Bremsrechner oder ein Zugrechner ist oder derartige Einrichtungen als Komponenten aufweist. Es ist vorstellbar, dass die Steuereinrichtung zum Empfang von Verzögerungsdaten, Fahrwiderstandsdaten und/oder Bremsdaten ausgebildet ist. Die Daten können durch geeignete Sensoreinrichtungen und/oder Steuereinrichtungen bereitgestellt und/oder an die Steuereinrichtung übertragbar sein. Eine Gesamtverzögerung des Schienenfahrzeugs während einer Bremsung kann die durch die Bremsung erreichte Geschwindigkeitsverringerung und/oder eine zur Verzögerung des Fahrzeugs ausgeübte Gesamtbremskraft betreffen. Fahrwiderstandsdaten können einen Fahrwiderstand des Schienenfahrzeugs betreffen, der beispielsweise durch einen Luftwiderstand und/oder einen Streckenwiderstand, insbesondere bei einer Steigung auftreten kann. Fahrwiderstandsdaten können insbesondere einen Luftwiderstand und/oder einen Rollwiderstand und/oder Verbraucher, welche durch auf der Schiene laufende Räder angetrieben werden, und/oder einen Losbrechwiderstand beim Anfahren und/oder einen Kurvenwiderstand beim Durchfahren einer Kurve und/oder einen Widerstand bei einer Steigung oder einem Gefälle und/oder Beschleunigungs- oder Bremswiderstände betreffen. Ein Fahrwiderstand und/oder Fahrwiderstandsdaten können basierend auf Messungen durch Sensoren, Experimenten, Simulationen und/oder Modellen ermittelt sein. Das Bestimmen eines Fahrwiderstands oder entsprechender Daten kann basierend auf oder unter Berücksichtigung der Sauthoff-Formel durchgeführt werden. Bremsdaten können eine auf das Schienenfahrzeug ausgeübte Bremskraft betreffen, welche durch eine oder mehrere weitere Bremseinrichtungen des Schienenfahrzeugs ausgeübt wird. Eine Bremskraft ist dabei allgemein als eine Kraft zu verstehen, die eine Verzögerung des Fahrzeugs und/oder eines zugeordneten Rades gegenüber der Schiene bewirkt. Es kann vorgesehen sein, dass bei Kenntnis der Gesamtverzögerung und aller relevanten Bremseinflüsse außer der durch die dynamische Bremseinrichtung ausgeübten Bremskraft letztere sich durch Subtrahieren der einzelnen aus den Verzögerungsdaten, Fahrwiderstandsdaten und Bremsdaten bestimmten Bremskräfte von der Gesamtbremskraft ermitteln lässt. Dabei wird davon ausgegangen, dass aus den Fahrwiderstandsdaten und Bremsdaten die Bremskräfte bestimmbar sind, welche auf das Fahrzeug wirken, mit Ausnahme der durch die dynamische Bremseinrichtung ausgeübten Bremskraft. Ein Schienenfahrzeug kann einen oder mehrere Wagen aufweisen. Ein Wagen kann ein angetriebener Wagen sein oder ohne Antrieb ausgestattet sein. Es ist vorstellbar, dass ein Schienenfahrzeug oder ein Wagen ein oder mehrere Drehgestelle aufweist, an denen Radachsen des Fahrzeugs vorgesehen sein können. Eine Sensoreinrichtung kann einen oder mehrere Sensoren aufweisen. Es kann vorgesehen sein, dass eine Sensoreinrichtung eine Steuereinrichtung umfasst, die insbesondere zum Auswerten und/oder Aufbereiten von Messdaten von Sensoren ausgebildet sein kann. Eine Sensoreinrichtung kann zur Datenübertragung mit der Steuereinrichtung verbunden oder verbindbar sein.

Die mindestens eine weitere Bremseinrichtung kann eine Reibungsbremseinrichtung umfassen, insbesondere eine druckbetätigte Reibungsbremseinrichtung. Die Reibungsbremseinrichtung kann als Betriebsbremse vorgesehen sein. Eine druckbetätigte Reibungsbremseinrichtung kann beispielsweise eine pneumatische, elektropneumatische, elektrohydraulische oder hydraulische Reibungsbremseinrichtung sein. Bei einer druckbetätigten Reibungsbremseinrichtung wird ein Bremsdruck durch Krafterzeuger in eine Betätigungskraft umgesetzt, welche Reibelemente der Reibungsbremseinrichtung in reibenden Kontakt zum Bremsen eines Rades oder einer Radachse bringt.

Der Reibungsbremseinrichtung kann eine Bremskraftsensoreinrichtung zugeordnet sein, welche es vermag, Bremsdaten zu erfassen, welche eine durch die Reibungsbremseinrichtung ausgeübte Bremskraft repräsentieren. Vorteilhafterweise misst die Bremskraftsensoreinrichtung die tatsächlich von der Reibungsbremseinrichtung ausgeübte Bremskraft und/oder ein von der Reibungsbremseinrichtung ausgeübtes Bremsmoment, um diese als Bremsdaten bereitzustellen. Eine derartige Sensoreinrichtung kann Sensoren aufweisen, die jeweils innerhalb eines durch eine Bremsung erzeugten mechanischen Kraftflusses angeordnet sind, um eine Verformung von an einem Drehgestell angebrachten Komponenten des Schienenfahrzeugs durch die Bremskraft zu messen. Dies ermöglicht eine genaue Erfassung der durch die Reibungsbremseinrichtung ausgeübten Bremskraft. Es ist vorstellbar, dass alternativ oder zusätzlich eine druckbetätigte Reibungsbremseinrichtung mittels einer Bremsdrucksensoreinrichtung überwacht wird. Aus einem Bremsdruck lässt sich in der Regel zumindest indirekt auf eine Betätigungskraft und/oder eine Bremskraft schließen.

Die mindestens eine weitere Bremseinrichtung kann mindestens eine kraftschlussunabhängige Bremseinrichtung umfassen, insbesondere eine Magnetschienenbremseinrichtung und/oder eine lineare Wirbelstrombremseinrichtung.

Der mindestens einen kraftschlussunabhängigen Bremseinrichtung kann eine Bremskraftsensoreinrichtung zugeordnet sein, welche es vermag, Bremsdaten zu erfassen, welche eine durch die mindestens eine kraftschlussunabhängige Bremseinrichtung ausgeübte Bremskraft repräsentieren. Es ist vorstellbar, dass zur Erfassung der durch die Magnetschienenbremseinrichtung und/oder die lineare Wirbelstrombremseinrichtung erzeugten Bremskraft eine Sensoreinrichtung zum Erfassen des durch die Wirbelstrombremseinrichtung oder die Magnetschienenbremseinrichtung fließenden Stromes vorgesehen ist. Es kann auch vorgesehen sein, dass insbesondere einer Magnetschienenbremseinrichtung eine Bremskraftsensoreinrichtung zugeordnet ist, welche es vermag, eine durch die Magnetschienenbremseinrichtung ausgeübte Bremskraft zu erfassen. Eine derartige Bremskraftsensoreinrichtung kann beispielsweise eine mechanische Rückwirkung auf die Magnetschienenbremseinrichtung bei einer Bremsung erfassen, welche durch Ausüben der Bremskraft auf die Magnetschienenbremseinrichtung und/oder ihre mechanische Verbindung zu einem Drehgestell oder Wagenaufbau wirkt. Allgemein kann es zweckmäßig sein, wenn eine Sensoreinrichtung vorgesehen ist, welche es vermag, die von allen weiteren Bremseinrichtungen ausgeübten Bremskräfte zu erfassen. Dabei können Sensoren zur Erfassung der durch einzelne Bremsen einer Bremseinrichtung ausgeübten Bremskräfte vorgesehen sein, so dass vorzugsweise die von allen Komponenten der mindestens einen weiteren Bremseinrichtung ausgeübten Bremskräfte erfasst werden.

Die Steuereinrichtung kann dazu ausgebildet sein, eine Gesamtverzögerung basierend auf Fahrzeuggeschwindigkeitsdaten zu bestimmen. Somit können die Fahrzeuggeschwindigkeitsdaten als Verzögerungsdaten angesehen werden. Aus dem Verlauf einer Fahrzeuggeschwindigkeit kann auf eine Verzögerung des Fahrzeugs und somit beispielsweise mit Kenntnis weiterer Fahrzeugparameter wie Fahrzeugmasse und/oder -trägheit auf eine ausgeübte Gesamtbremskraft geschlossen werden.

Die Steuereinrichtung kann mit mindestens einer Sensoreinrichtung verbunden oder verbindbar sein, welche mindestens einen Beschleunigungssensor zur Bestimmung von Verzögerungsdaten aufweist. Der Beschleunigungssensor kann insbesondere dazu ausgebildet sein, eine Gesamtverzögerung des Schienenfahrzeugs zu ermitteln. Es ist vorstellbar, dass die Steuereinrichtung einen Beschleunigungssensor neben der Bestimmung der Gesamtverzögerung aus Fahrzeuggeschwindigkeitsdaten einsetzt, um eine redundante Bestimmung der Gesamtverzögerung aus unterschiedlichen, voneinander unabhängig erfassten Daten zu ermöglichen.

Die Steuereinrichtung kann zum Empfangen von Bremsdaten und/oder Verzögerungsdaten und/oder Fahrwiderstandsdaten und/oder Bremsdaten mit einer oder mehreren geeigneten Sensoreinrichtung und/oder anderen Steuereinrichtungen verbunden sein.

Die Erfindung betrifft ferner eine Bremsanlage mit mindestens einer dynamischen Bremseinrichtung und mindestens einer weiteren Bremseinrichtung sowie einer hierein beschriebenen Steuereinrichtung.

Außerdem betrifft die Erfindung ein Schienenfahrzeug mit einer hierein beschriebenen Steuereinrichtung und/oder einer hierin beschriebenen Bremsanlage. Erfindungsgemäß ist auch ein Verfahren zum Bestimmen einer von einer dynamischen Bremseinrichtung einer Bremsanlage eines Schienenfahrzeugs während einer Bremsung ausgeübten Bremskraft durch eine Steuereinrichtung vorgesehen, wobei die Bremsanlage mindestens eine weitere Bremseinrichtung aufweist und wobei die Steuereinrichtung basierend auf Verzögerungsdaten, welche eine Gesamtverzögerung des Schienenfahrzeugs repräsentieren, Fahrwiderstandsdaten, welche einen Fahrwiderstand des Schienenfahrzeugs repräsentieren, und Bremsdaten, welche eine durch die mindestens eine weitere Bremseinrichtung ausgeübte Bremskraft repräsentieren, während einer Bremsung die durch die dynamische Bremseinrichtung ausgeübte Bremskraft bestimmt. Die Steuereinrichtung kann eine hierin beschriebene Steuereinrichtung sein. Die Bremsanlage kann eine hierin beschriebene Bremsanlage sein. Die mindestens eine weitere Bremseinrichtung kann eine Reibungsbremseinrichtung umfassen, insbesondere eine druckbetätigte Reibungsbremseinrichtung. Es ist vorstellbar, dass der Reibungsbremseinrichtung eine Bremskraftsensoreinrichtung zugeordnet ist, welche es vermag, Bremsdaten zu erfassen, welche eine durch die Reibungsbremseinrichtung ausgeübte Bremskraft repräsentieren. Die mindestens eine weitere Bremseinrichtung kann mindestens eine kraftschlussunabhängige Bremseinrichtung umfassen, insbesondere eine Magnetschienenbremseinrichtung und/oder eine lineare Wirbelstrombremseinrichtung. Es kann vorgesehen sein, dass der mindestens einen kraftschlussunabhängigen Bremseinrichtung eine Bremskraftsensoreinrichtung zugeordnet ist, welche es vermag, Bremsdaten zu erfassen, welche eine durch die mindestens eine kraftschlussunabhängige Bremseinrichtung ausgeübte Bremskraft repräsentieren. Die Steuereinrichtung kann eine Gesamtverzögerung aus Fahrzeuggeschwindigkeitsdaten bestimmen. Die Steuereinrichtung kann mit einer Sensoreinrichtung verbunden werden, welche mindestens einen Beschleunigungssensor zur Bestimmung von Verzögerungsdaten aufweist.

Die Erfindung wird nun mit Bezug auf die begleitende Zeichnung anhand bevorzugter Ausführungsformen beispielhaft erläutert

Es zeigt:

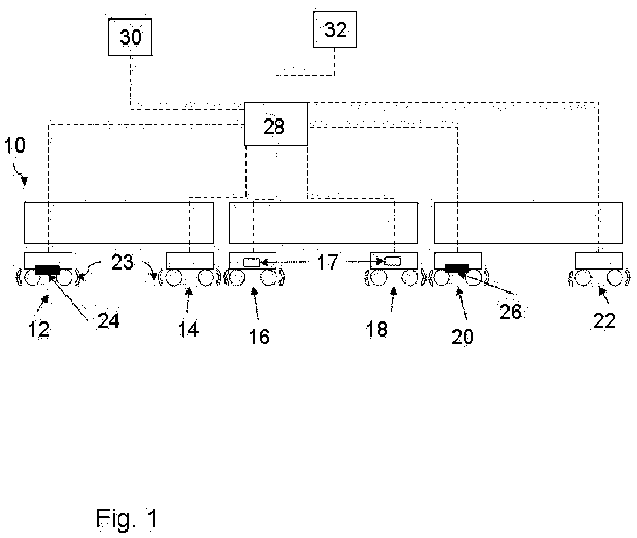

- Figur 1: ein Schienenfahrzeug mit einer Bremsanlage.

Figur 1 zeigt ein Schienenfahrzeug 10 mit mehreren Wagen. An den Wagen sind Drehgestelle 12, 14, 16, 18, 20 und 22 vorgesehen. An den Drehgestellen 12, 14, 16, 18, 20, 22 sind jeweils zwei Radachsen angebracht, an denen sich Räder drehen können, die in Kontakt mit einer Schiene stehen. Jeder Radachse ist in diesem Beispiel eine pneumatisch betätigte Klotzbremse zugeordnet, die symbolisch als Halbbogen dargestellt ist. Die Klotzbremsen sind jeweils Teil einer pneumatischen Reibungsbremseinrichtung 23. Ferner sind an den Drehgestellen 12 und 20 als Balken symbolisierte Magnetschienenbremsen 24, 26 vorgesehen, die als Teile einer kraftschlussunabhängigen Bremseinrichtung angesehen werden können. An den Drehgestellen 16 und 18 ist jeweils eine hydrodynamische Bremse 17 vorgesehen, die als Teil einer dynamischen Bremseinrichtung anzusehen ist. Es versteht sich, dass statt Klotzbremsen auch Scheibenbremsen und statt hydrodynamischen Bremsen auch andere Arten dynamischer Bremsen verwendet werden können. Jeder Magnetschienenbremse 24, 26 ist ein Sensor einer Sensoreinrichtung zugeordnet, welcher es vermag, die während einer Bremsung durch die Magnetschienenbremseinrichtung ausgeübte Bremskraft anhand einer mechanischen Verformung von Komponenten der Magnetschienenbremseinrichtung zu erfassen und als Bremsdaten bereitzustellen. Ebenso ist jeder Klotzbremse der Reibungsbremseinrichtung eine Bremskraftsensoreinrichtung zugeordnet, welche es vermag, die durch eine einzelne Reibungsbremseinrichtung ausgeübte Bremskraft zu erfassen. Die zugeordneten Sensoren sind jeweils über eine Datenübertragungsverbindung an eine Steuereinrichtung 28 angeschlossen. In der Figur 1 sind Datenübertragungsverbindungen allgemein gestrichelt dargestellt und können kabelgebunden oder Funkverbindungen sein. Aus Gründen der Übersichtlichkeit ist pro Drehgestell nur eine Datenübertragungsverbindung dargestellt. Es versteht sich, dass unterschiedliche Einrichtungen auf einem Drehgestell auch über unterschiedliche Datenübertragungsverbindungen an die Steuereinrichtung 28 angeschlossen sein können. Die Steuereinrichtung 28 empfängt von den Magnetschienenbremsen 24, 26 und der Reibungsbremseinrichtung 23 Bremsdaten, welche die jeweils während einer Bremsung durch die Komponenten oder Bremsen der jeweiligen Bremseinrichtung ausgeübte Bremskraft repräsentieren. Allgemein ist vorgesehen, dass die Bremsdaten alle durch Bremseinrichtungen ausgeübten Bremskräfte repräsentieren, mit Ausnehme der durch die dynamischen Bremsen ausgeübten Bremskräfte. Die Steuereinrichtung 28 ist ferner mit einer Verzögerungssensoreinrichtung 30 verbunden, über welche sie die Gesamtverzögerung des Schienenfahrzeugs während einer Bremsung repräsentierende Daten empfängt. Die Verzögerungssensoreinrichtung 30 kann insbesondere Daten bezüglich der Fahrtgeschwindigkeit bereitstellen und/oder den Fahrtgeschwindigkeitsverlauf überwachen. Es ist eine Einrichtung 32 zur Erfassung von Fahrwiderstandsdaten vorgesehen. Die Einrichtung 32 kann eine Speichereinrichtung aufweisen, in der Parameter bezügliche eines Fahrwiderstands abgespeichert sein können. Darüber hinaus kann die Einrichtung 32 einen oder mehrere Beschleunigungssensoren und/oder andere Sensoren zur Bestimmung eines Fahrwiderstands aufweisen. Derartige Sensoren können beispielsweise Neigungssensoren sein, um eine Steigung, ein Gefälle oder eine Kurvenfahrt zu bestimmen und/oder entsprechende Parameter zu erfassen. Die Steuereinrichtung 28 vermag es, basierend auf ihr von der Reibbremseinrichtung 23 und ihren Klotzbremsen sowie den von der Magnetschienenbremseinrichtung stammenden Bremsdaten, Verzögerungsdaten von der Verzögerungssensoreinrichtung 30 und Fahrwiderstandsdaten von der Einrichtung 32 einerseits eine Gesamtbremskraft zu bestimmen, die auf das Fahrzeug wirkt, und andererseits von der Gesamtbremskraft basierend auf den Bremsdaten, Verzögerungsdaten und Fahrwiderstandsdaten ermittelte Bremskräfte abzuziehen, um damit die durch eine dynamische Bremseinrichtung ausgeübte Bremskraft zu erhalten. In der Figur 1 sind die Klotzbremsen, die Magnetschienenbremsen 24, 26 und die dynamischen Bremsen 17 als Teile einer Bremsanlage anzusehen.

### Bezugszeichenliste

- 10: Schienenfahrzeug
- 12: Drehgestell
- 14: Drehgestell
- 16: Drehgestell
- 18: Drehgestell
- 20: Drehgestell
- 22: Drehgestell
- 23: Reibbremseinrichtung
- 24: Magnetschienenbremse
- 26: Magnetschienenbremse
- 28: Steuereinrichtung
- 30: Verzögerungssensoreinrichtung
- 32: Fahrwiderstandseinrichtung

## Patentansprüche

1. Steuereinrichtung (28) für ein Schienenfahrzeug (10), wobei das Schienenfahrzeug (10) eine Bremsanlage mit mindestens einer dynamischen Bremseinrichtung (17) und mindestens einer weiteren Bremseinrichtung (23, 24, 26) aufweist **dadurch gekennzeichnet, dass** die Steuereinrichtung (28) dazu ausgebildet ist, basierend auf Verzögerungsdaten, welche eine Gesamtverzögerung des Schienenfahrzeugs repräsentieren, Fahrwiderstandsdaten, welche einen Fahrwiderstand des Schienenfahrzeugs repräsentieren und Bremsdaten, welche eine durch die mindestens eine weitere Bremseinrichtung ausgeübte Bremskraft repräsentieren, eine während einer Bremsung durch die dynamische Bremseinrichtung (17) ausgeübte Bremskraft zu bestimmen.

2. Steuereinrichtung nach Anspruch 1, wobei die mindestens eine weitere Bremseinrichtung (23, 24, 26) eine Reibungsbremseinrichtung (23) umfasst, insbesondere eine druckbetätigte Reibungsbremseinrichtung.

3. Steuereinrichtung nach Anspruch 2, wobei der Reibungsbremseinrichtung (23) eine Bremskraftsensoreinrichtung zugeordnet ist, welche es vermag, Bremsdaten zu erfassen, welche eine durch die Reibungsbremseinrichtung (23) ausgeübte Bremskraft repräsentieren.

4. Steuereinrichtung nach einem der vorhergehenden Ansprüche, wobei die mindestens eine weitere Bremseinrichtung (23, 24, 26) mindestens eine kraftschlussunabhängige Bremseinrichtung (24, 26) umfasst, insbesondere eine Magnetschienenbremseinrichtung und/oder eine lineare Wirbelstrombremseinrichtung.

5. Steuereinrichtung nach einem der vorhergehenden Ansprüche, wobei der mindestens einen kraftschlussunabhängigen Bremseinrichtung (24, 26) eine Bremskraftsensoreinrichtung zugeordnet ist, welche es vermag, Bremsdaten zu erfassen, welche eine durch die mindestens eine kraftschlussunabhängige Bremseinrichtung ausgeübte Bremskraft repräsentieren.

6. Steuereinrichtung nach einem der vorhergehenden Ansprüche, wobei die Steuereinrichtung (28) dazu ausgebildet ist, eine Gesamtverzögerung basierend auf Fahrzeuggeschwindigkeitsdaten zu bestimmen.

7. Steuereinrichtung nach einem der vorhergehenden Ansprüche, wobei die Steuereinrichtung (28) mit einer Sensoreinrichtung (30) verbunden oder verbindbar ist, welche mindestens einen Beschleunigungssensor zur Bestimmung von Verzögerungsdaten aufweist.

8. Bremsanlage für ein Schienenfahrzeug (10) mit mindestens einer dynamischen Bremseinrichtung (17), mindestens einer weiteren Bremseinrichtung (23, 24, 26) und einer Steuereinrichtung (28) nach einem der Ansprüche 1 bis 7.

9. Schienenfahrzeug (10) mit einer Bremsanlage nach Anspruch 8 und/oder einer Steuereinrichtung (28) nach einem der Ansprüche 1 bis 7.

10. Verfahren zum Bestimmen, durch eine Steuereinrichtung (28), einer von einer dynamischen Bremseinrichtung (17) einer Bremsanlage eines Schienenfahrzeugs (10) während einer Bremsung ausgeübten Bremskraft, wobei die Bremsanlage mindestens eine weitere Bremseinrichtung (23, 24, 26) aufweist, wobei die Steuereinrichtung (28) basierend auf Verzögerungsdaten, welche eine Gesamtverzögerung des Schienenfahrzeugs (10) repräsentieren, Fahrwiderstandsdaten, welche einen Fahrwiderstand des Schienenfahrzeugs (10) repräsentieren, und Bremsdaten, welche eine durch die mindestens eine weitere Bremseinrichtung (23, 24, 26) ausgeübte Bremskraft repräsentieren, während einer Bremsung die durch die dynamische Bremseinrichtung (17) ausgeübte Bremskraft bestimmt.

## Claims

1. Control device (28) for a rail vehicle (10), wherein the rail vehicle (10) has a brake system comprising at least one dynamic brake device (17) and at least one further brake device (23, 24, 26), **characterised in that** the control device (28) is designed to determine a braking force, which is exerted during a braking operation by the dynamic brake device (17) on the basis of deceleration data which represent total deceleration of the rail vehicle, travelling resistance data which represent a travelling resistance of the rail vehicle, and brake data which represent a braking force which is exerted by the at least one further brake device.

2. Control device according to claim 1, wherein the at least one further brake device (23, 24, 26) comprises a friction brake device (23), in particular a pressure-operated friction brake device.

3. Control device according to claim 2, wherein the friction brake device (23) has an associated braking force sensor device which can detect brake data which represent a braking force which is exerted by the friction brake device (23).

4. Control device according to any of the receding claims, wherein the at least one further brake device (23, 24, 26) comprises at least one adhesion-independent brake device (24, 26), in particular a magnetic track brake device and/or a linear eddy-current brake device.

5. Control device according to any of the receding claims, wherein the at least one adhesion-independent brake device (24, 26) has an associated braking force sensor device which can detect brake data which represent a braking force which is exerted by the at least one adhesion-independent brake device.

6. Control device according to any of the receding claims, wherein the control device (28) is designed to determine total deceleration on the basis of vehicle speed data.

7. Control device according to any of the receding claims, wherein the control device (28) is connected or can be connected to a sensor device (30) which has at least one acceleration sensor for determining deceleration data.

8. Brake system for a rail vehicle (10) comprising at least one dynamic brake device (17), at least one further brake device (23, 24, 26) and a control device (28) according to any of claims 1 to 7.

9. Rail vehicle (10) comprising a brake system according to claim 8 and/or a control device (28) according to any of claims 1 to 7.

10. Method for determining, using a control device (28), a braking force which is exerted by a dynamic brake device (17) of a brake system of a rail vehicle (10) during a braking operation, wherein the brake system has at least one further brake device (23, 24, 26), wherein the control device (28) determines the braking force which is exerted by the dynamic brake device (17) during a braking operation on the basis of deceleration data which represent total deceleration of the rail vehicle (10), travelling resistance data which represent a travelling resistance of the rail vehicle (10), and brake data which represent a braking force which is exerted by the at least one further brake device (23, 24, 26).

## Revendications

1. Dispositif (28) de commande d'un véhicule (10) ferroviaire, le véhicule (10) ferroviaire comportant un système de frein ayant au moins un dispositif (17) de frein dynamique et au moins un autre dispositif (23, 24, 26) de frein,
**caractérisé en ce que** le dispositif (28) de commande est constitué pour, sur la base de données de décélération, qui représentent une décélération de l'ensemble du véhicule ferroviaire, de données de résistance à l'avancement, qui représentent une résistance à l'avancement du véhicule ferroviaire, et de données de frein, qui représentent une force de frein appliquée par le au moins un autre dispositif de frein, déterminer une force de frein appliquée par le dispositif (17) de frein dynamique pendant un freinage.

2. Dispositif de commande suivant la revendication 1, dans lequel le au moins un autre dispositif (23, 24, 26) de frein comprend un dispositif (23) de frein à friction, notamment un dispositif de frein à friction à actionnement par la pression.

3. Dispositif de commande suivant la revendication 2, dans lequel, au dispositif (23) de frein à friction, est associé un dispositif de capteur de force de frein, qui permet de détecter des données de frein, qui représentent une force de frein appliquée par le dispositif (23) de frein à friction.

4. Dispositif de commande suivant l'une des revendications précédentes, dans lequel le au moins un autre dispositif (23, 24, 26) de frein comprend au moins un dispositif (24, 26) de frein, qui dépend d'une coopération de force, notamment un dispositif de frein magnétique et/ou un dispositif linéaire de frein à courant de Foucault.

5. Dispositif de commande suivant l'une des revendications précédentes, dans lequel, au au moins un dispositif (24, 26) de frein, qui dépend d'une coopération de force, est associé à un dispositif de capteur d'une force de frein, qui permet de détecter des données de frein, qui représentent une force de frein appliquée par le au moins un dispositif de frein, qui dépend d'une coopération de force.

6. Dispositif de commande suivant l'une des revendications précédentes, dans lequel le dispositif (28) de commande est constitué pour déterminer une décélération d'ensemble sur la base de données de vitesse du véhicule.

7. Dispositif de commande suivant l'une des revendications précédentes, dans lequel le dispositif (28) de commande est relié à un dispositif (30) de capteur ou peut l'être, qui a au moins un capteur d'accélération pour déterminer des données de décélération.

8. Système de frein d'un véhicule (10) ferroviaire ayant au moins un dispositif (17) de frein dynamique, au moins un autre dispositif (23, 24, 26) de frein et un dispositif (28) de commande suivant l'une des revendications 1 à 7.

9. Véhicule (10) ferroviaire ayant un système de frein suivant la revendication 8 et/ou un dispositif (28) de commande suivant l'une des revendications 1 à 7.

10. Procédé de détermination, par un dispositif (28) de commande, d'une force de frein appliquée pendant un freinage par un dispositif (17) de frein dynamique d'un système de frein d'un véhicule (10) ferroviaire, le système de frein ayant au moins un autre dispositif (23, 24, 26) de frein, le dispositif (28) de commande déterminant, pendant un freinage, la force de frein appliquée par le dispositif (17) de frein dynamique sur la base de données de décélération, qui représentent une décélération de l'ensemble du véhicule (10) ferroviaire, de données de résistance à l'avancement, qui représentant une résistance à l'avancement du véhicule (10) ferroviaire, et de données de frein, qui représentent une force de frein appliquée par le au moins un autre dispositif (23, 24, 26) de frein.
